**Europäisches Patentamt**

**European Patent Office**

**Office européen des brevets**

(11) Veröffentlichungsnummer: **0 038 469**
**B1**

(12) **EUROPÄISCHE PATENTSCHRIFT**

(45) Veröffentlichungstag der Patentschrift:
14.11.84

(21) Anmeldenummer: 81102619.4

(22) Anmeldetag: 07.04.81

(51) Int. Cl.³: **F 16 B 5/06**

(54) Vorrichtung zum Zusammenklammern von Platten.

(30) Priorität: **11.04.80 SE 8002737**

(43) Veröffentlichungstag der Anmeldung:
**28.10.81 Patentblatt 81/43**

(45) Bekanntmachung des Hinweises auf die Patenterteilung:
**14.11.84 Patentblatt 84/46**

(84) Benannte Vertragsstaaten:
**CH DE FR GB LI NL**

(56) Entgegenhaltungen:
**FR - A - 2 435 662**
**NL - A - 7 313 621**
**US - A - 3 724 886**
**US - A - 3 786 611**

(73) Patentinhaber: **Sintek Development AB, Kungsgatan 48,**
**S-111 35 Stockholm (SE)**

(72) Erfinder: **Alneng, Carl-Göran, Robertsviksvägen 16,**
**S-182 35 Danderyd (SE)**

(74) Vertreter: **Prüfer, Lutz H., Dipl.-Phys.,**
**Willroiderstrasse 8, D-8000 München 90 (DE)**

ACTORUM AG

## Beschreibung

Die Erfindung betrifft eine Vorrichtung zum Zusammenklammern von im wesentlichen in derselben Ebene mit ihren Kantenflächen gegeneinanderliegenden Platten gemäss des Oberbegriffes des Anspruches 1.

Eine derartige Vorrichtung ist aus der NL-A-7 313 621 bekannt. Bei dieser bekannten Vorrichtung werden zwei plattenförmige Elemente dadurch verbunden, dass zwischen den Stirn- bzw. Kantenflächen der plattenförmigen Elemente durchgehende Spannschrauben angeordnet sind, die mit ihren Enden an beiden Seiten der Platten hervorstehen und dort über ein Klammerelement mit auf der jeweiligen Plattenoberfläche angebrachten Plattenbeschlägen in Eingriff stehen. Es stehen somit zu beiden Seiten der Platten Teile der Klammervorrichtung über die Plattenflächen hervor. Ferner ist eine genau fluchtende Ausrichtung der Plattenflächen nicht in einfacher Weise möglich, da keine gemeinsame Anlagefläche für die Platten vorgesehen ist.

Es ist daher Aufgabe der Erfindung, eine Vorrichtung zum Verbinden von Platten zu schaffen, bei der die Plattenoberflächen ohne zusätzlichen Justierungsaufwand in eine Flucht gebracht werden können und keine Teile über diese Plattenoberfläche hinausstehen.

Diese Aufgabe wird erfindungsgemäss durch eine Vorrichtung der eingangs beschriebenen Art gelöst, die gekennzeichnet ist durch die Merkmale des kennzeichnenden Teiles des Anspruches 1.

Die Erfindung wird im weiteren anhand von zwei Ausführungen beschrieben. Die Ausführungen sind in den beigefügten Figuren folgendermassen dargestellt:

Fig. 1 ist ein Vertikalschnitt durch eine Klammervorrichtung gemäss der Erfindung in Anwendung an zwei Platten;

Fig. 2–7 sind je ein Querschnitt und eine Längsansicht von drei in der Klammervorrichtung enthaltenen Teilen;

Fig. 8 ist eine Perspektivansicht von zwei mittels der Klammervorrichtung gemäss der Erfindung miteinander verbundenen Tischen;

Fig. 9 ist ein Vertikalschnitt durch eine modifizierte Klammervorrichtung gemäss der Erfindung in Anwendung an zwei Platten;

Fig. 10 ist eine Draufsicht auf zwei Teile von mittels der Klammervorrichtung gem. Fig. 9 miteinander verbundenen Platten.

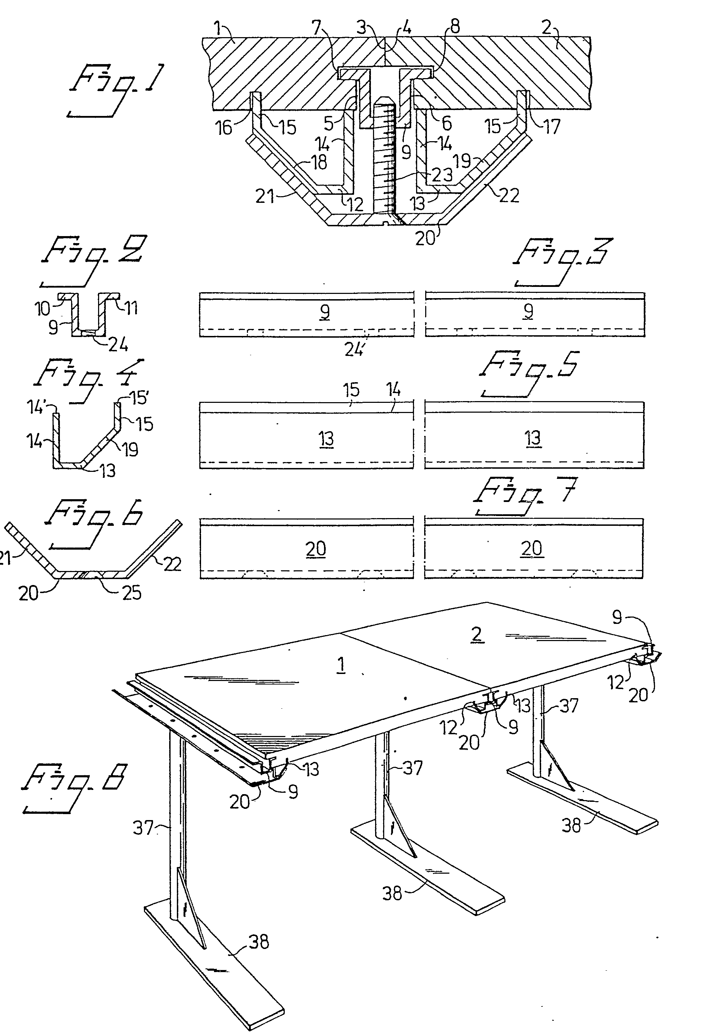

Gemäss der in Fig. 1–8 dargestellten Ausführung zeigt Fig. 1 einen Teil von je einer Tischplatte 1, 2, deren Kantenfläche 3, 4 nur mit einem Teil ihrer Breite gegeneinander anliegen, im übrigen aber durch eine längs den ganzen Kantenflächen 3, 4 verlaufende Kantenausfräsung 5 bzw. 6 voneinander getrennt sind. Die innere Partie der Kantenausfräsungen weist einen Schlitz 7 bzw. 8 auf. Eine annähernd U-förmige Spannschiene 9 erstreckt sich längs im wesentlichen der ganzen Länge der Kantenflächen 3, 4 und ist mit aufwärtsgerichteten Flanschen 10, 11, Fig. 2, 3, in Eingriff mit je einem Schlitz 7, 8 versehen.

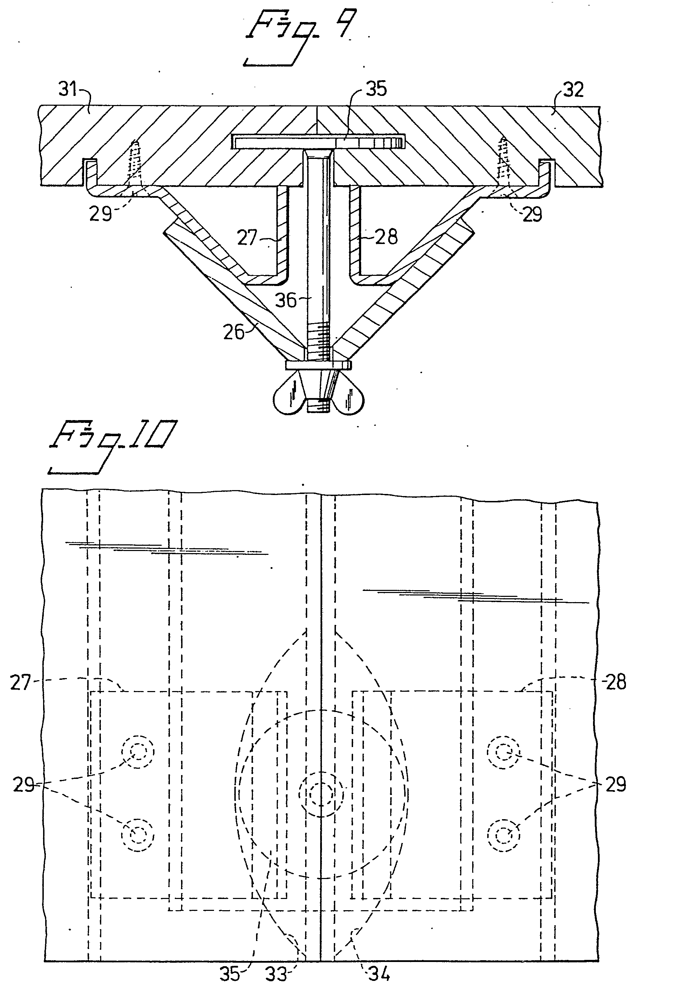

Ein im wesentlichen rinnenförmiger Plattenbeschlag 12, 13 ist gegen die Unterseite der Tischplatten 1, 2 und beidseitig der Spannschiene 9 parallel mit den Kantenflächen 3, 4 so angebracht, dass er mit der Kantenfläche 14' einer Seite 14, Fig. 4, 5, gegen die Unterseite der betreffenden Tischplatte stösst und mit seinem anderen Seitenkantenteil 15 in eine Längsnut 16 bzw. 17 in der Unterseite jeder Tischplatte eingreift sowie mit seiner Kantenfläche 15' vorzugsweise gegen die betreffende Tischplatte stösst. Die Aussenseiten 18, 19 der Plattenbeschläge 12, 13 bilden miteinander einen Winkel von 90°, und die Seiten 21, 22 einer rinnenförmigen Ständerschiene 20, Fig. 6, 7, bilden miteinander gleichfalls einen Winkel von 90° und sind mittels mehrerer längs der Ständerschiene 20 verteilter und zwischen dieser und der Spannschiene 9 angebrachter Schrauben 23 gegen die Aussenseiten 18, 19 der Plattenbeschläge 12, 13 angepresst. Die Schrauben 23 sind in eine Gewindebohrung 24 in der Spannschiene 9 eingeschraubt, und ihr Kopf ruht in einem versenkten Loch 25 in der Ständerschiene.

Die beschriebene erfindungsgemässe Klammervorrichtung bietet insbesondere folgende Vorteile. Bei Anziehen der Spannschrauben 23 wird die Ständerschiene 20 gegen die Plattenbeschläge 12, 13 gepresst. Aufgrund des genannten Winkels von 90° treiben die Plattenbeschläge 12, 13 die Platten 1, 2 dicht gegeneinander und stützen sich mittels ihrer Kantenflächen 14', 15' gegen die Unterseite der Platten 1, 2 ab. Die Platten erhalten dadurch dieselbe Niveaulage, und durch die parallel mit und quer zur Ebene der Platten 1, 2 wirkenden Spannkräfte werden die Platten besonders stabil miteinander verbunden. Die in einem Plattenpaar an den Kantenflächen erforderlichen Kantenausfräsungen 5, 6, Schlitze 7, 8 und Nuten 16, 17, wie auch die in der Klammervorrichtung erforderliche Spannschiene 9, die Plattenbeschläge 12, 13 und die Ständerschiene 20 einschl. der Spannschrauben sind alle leicht maschinell herzustellen, und die Platten lassen sich durch Montieren oder Abmontieren der vorliegenden Klammervorrichtung mühelos Kante an Kante miteinander verbinden oder voneinander trennen.

Die in Fig. 9 und 10 gezeigte Ausführung unterscheidet sich von der in Fig. 1–8 gezeigten im wesentlichen lediglich dadurch, dass die Ständerschiene 26 ein zwischen seinen Flanschen einen Winkel von 90° bildendes Winkelprofil ist (das wie die übrigen Teile in der Klammervorrichtung, falls dies bevorzugt wird, aus Leichtmetall besteht) und sich längs der ganzen Verbindung erstreckt. Die Plattenbeschläge 27, 28 haben zwar einen ähnlichen Querschnitt wie in Fig. 1, sind aber, wie Fig. 10 zeigt, in Längsrichtung kurz und mittels Schrauben 29 befestigt. Jede Platte 31, 32 hat anstelle der Längsschlitze 7, 8 und Spannschiene 9 in Fig. 1 kürzere Schlitze 33, 34 für einen plattenförmigen Kopf 35 der Spannschraube 36.

Auch diese erfindungsgemässe Ausführung bietet Vorteile ähnlich denen der für die Vorrichtung gem. Fig. 1–8 beschriebenen. Ausserdem ist die Ausführung mit Schraubenkopf einfacher als eine Spannschiene 9. Die Montage mehrerer Plattenbeschläge 28 bedeutet jedoch mehr Arbeit.

Fig. 8 zeigt die Klammervorrichtung in Anwendung zum Verbinden von Tischplatten 1, 2, wobei jede Ständerschiene 20 nahe einem Ende von einem Bein 37 mit einem mit der ganzen Länge der Ständerschiene parallelen Fuss 38 getragen wird. Die Ständerschiene kann von jeder beliebigen Anordnung getragen werden. Mit der Klammervorrichtung können die Kanten mehrerer verschiedener Gegenstände, wie Tischplatten, Regalbretter, Schaukästen in Läden, Warenhäusern, Ausstellungsräumen und Lagerlokalen, wie auch mehrteilige Giessformen zum Giessen beim Hausbau u. dgl. lösbar zusammengefügt werden.

Die Erfindung ist nicht nur auf die beschriebenen und in den Zeichnungen dargestellten Ausführungen begrenzt anzusehen, da diese insbesondere in ihrer Teilausbildung im Rahmen der Erfindung abgewandelt werden können. Der angegebene 90° Winkel z.B. kann je nach dem zwischen den resultierenden Spannkräften gewünschten gegenseitigen Grössenverhältnis geändert werden. Bei Anwendung eines plattenförmigen Schraubenkopfes anstelle einer Spannschiene können die längslaufenden Kantenausfräsungen in den gegeneinanderstossenden Kantenflächen durch lediglich eine Ausnehmung für die mit Kopf versehene Schraube ersetzt werden.

**Patentansprüche**

1. Vorrichtung zum Zusammenklammern von im wesentlichen in derselben Ebene mit ihren Kantenflächen (3, 4) gegeneinanderliegenden Platten (1, 2) mit je einem mit einer Plattenfläche, jeder Platte verbindbaren rinnenförmigen Plattenbeschlag (12, 13; 27, 28), einem Klammerelement (20; 26) mit zwei einen Winkel einschliessenden Innenseiten die jeweils an einer Aussenseite (18, 19) des Plattenbeschlags anliegen, einem Gegenhalter (9; 35) und den Gegenhalter mit dem Klammerelement verbindenden Spannschrauben (23; 36) mit denen die Platten (1, 2) über das Klammerelement und die Plattenbeschläge gegeneinander und zum Gegenhalter hin spannbar sind, dadurch gekennzeichnet, dass das Klammerelement eine Ständerschiene (20, 26) oder ein Schienenabschnitt ist, dass jeder Plattenbeschlag (12, 13; 27, 28) mit der Kantenfläche (14') einer Seite (14) gegen die Unterseite der betreffenden Platte (1, 2) nahe deren Kantenfläche (3, 4) stösst und mit seinem anderen Seitenteil (15) in eine zur Kantenfläche (3, 4) parallele Längsnut (10, 17) der betreffenden Platte (1, 2) eingreift, dass der Gegenhalter eine Spannschiene (9) oder ein Spannkopf (35) ist und mit Schlitzen (7, 8; 33, 34) oder Ausnehmungen in den Kantenflächen (3, 4) in Eingriff bringbar und derart ausgebildet ist, dass er die Platten (1, 2) in verbundenem Zustand gegeneinanderstossend und mit fluchtenden Plattenflächen hält.

2. Vorrichtung nach Anspruch 1, dadurch gekennzeichnet, dass die Spannschiene (9) zwei mit den Schlitzen (7, 8) in Eingriff bringbare Flansche (10, 11) aufweist.

3. Vorrichtung nach Anspruch 2, dadurch gekennzeichnet, dass die Spannschiene (9) einen im wesentlichen U-förmigen Querschnitt aufweist.

4. Vorrichtung nach einem der Ansprüche 1 bis 3, dadurch gekennzeichnet, dass die Ständerschiene (20; 26) rinnenförmig mit zwei einen Winkel von im wesentlichen 90° einschliessenden Seiten (21, 22) ausgebildet ist.

5. Vorrichtung nach einem der Ansprüche 1–4, dadurch gekennzeichnet, dass eine Mehrzahl von Plattenbeschlägen (12, 13; 27, 28) vorgesehen sind.

6. Vorrichtung nach einem der Ansprüche 1–5, dadurch gekennzeichnet, dass die Ständerschiene (20; 26) an einem zum Tragen der Platten (1, 2) bestimmten Bein (37) befestigt ist.

**Claims**

1. Apparatus for clamping together plates (1, 2) lying substantially in a common plane with abutting edge surfaces (3, 4) thereof, comprising a respective groove-like plate fitting (12, 13; 27, 28) connectable with a plate surface of each plate, a clamping member (20; 26) having two inner sides including an angle therebetween and each lying against a respective outside (18, 19) of the plate fitting, a backing member (9; 35) and clamping bolts (23; 36) connecting the backing member with the clamping member and serving for clamping the plates (1, 2) towards each other and towards the backing member via the clamping member and the plate fittings, characterized in that the clamping member is a holder bar (20, 26) or a bar section, that the edge surface (14') of one side of each plate fitting (12, 13; 27, 28) abuts against the underside of the respective plate (1, 2) close to the edge surface (3, 4) thereof and the other lateral part (15) thereof engages a longitudinal groove (16, 17) of the respective plate (1, 2) being parallel to the edge surface (3, 4), that the backing member is a clamping bar (9) or a clamping head (35) which may be brought into engagement with slits (7, 8; 33, 34) or recesses in the edge surfaces (3, 4) and which is designed such that it holds the plates (1, 2) in their connected state abutting against each other and having aligned plate surfaces.

2. Apparatus according to claim 1, characterized in that the clamping bar (9) comprises two flanges (10, 11) engageable with the slits (7, 8).

3. Apparatus according to claim 2, characterized in that the clamping bar (9) has a substantially U-shaped cross-section.

4. Apparatus according to the claims 1–3, characterized in that the holder bar (20; 26) is formed groove-like with two lateral parts (21, 22) including an angle of substantially 90°.

5. Apparatus according to one of the claims 1–4, characterized in that a plurality of plate fittings (12, 13; 27, 28) are provided.

6. Apparatus according to one of the claims 1–5, characterized in that the holder bar (20; 26) is mounted to a leg (37) serving for supporting the plates (1, 2).

**Revendications**

1. Dispositif de cramponner ensemble des panneaux (1, 2) dont les surfaces d'arête (3, 4) sont adjacents sensiblement dans le même plan, utilisant une garniture en forme de gouttière (12, 13; 27, 28) à raccorder à une surface d'arête de chaque panneau, et au moyen d'un élément-crampon (20; 26) comprenant deux faces internes formant un angle, chaqune desdites faces portant contre une face extérieure (18, 19) de la garniture susdite, et moyennant un contre-crampon (9; 35) et des vis tendeuses (23; 36) pour tendre les panneaux (1, 2) par l'élément-crampon et les garnitures l'un contre l'autre et vers le contre-crampon, caractérisé en ce que l'élément-crampon est un rail du support (20, 26) ou une partie de rail, que la surface d'arête (14') à un côté (14) de chaque garniture (12, 13; 27, 28) aboutit contre la face inférieure du panneau relatif (1, 2) auprès de la surface d'arête (3, 4) de la dernière tandis que son autre côté (15) s'emboîte dans une rainure longitudinale (16, 17) parallèle à la surface d'arête (3, 4) du panneau respectif; que le contre-crampon est un rail tendeur (9) ou une tête de serrage (35) pourvue pour l'emboîtement dans des fentes (7, 8; 33, 34) ou des encoches dans les surfaces d'arête (3, 4), est formé d'une manière qu'il tienne les panneaux (1, 2) en état cramponné et rapproché, leurs surfaces d'arête étant en alignement.

2. Dispositif selon la revendication 1, caractérisé en ce que le rail tendeur (9) est pourvu de deux rebords (10, 11) susceptibles de s'emboîter dans lesdites fentes (7, 8).

3. Dispositif selon la revendication 2, caractérisé en ce que le rail tendeur (9) a une section sensiblement en U.

4. Dispositif selon l'une des revendications 1 à 3, caractérisé en ce que le rail du support (20; 26) a la forme d'une gouttière pourvue de deux parois latérales (21, 22) formant sensiblement un angle de 90°.

5. Dispositif selon l'une des revendications 1 à 4, caractérisé en ce qu'il y a une pluralité des garnitures (12, 13; 27, 28).

6. Dispositif selon l'une des revendications 1 à 5, caractérisé en ce que le rail de support (20; 26) est fixé à un montant (37) destiné à porter les panneaux (1, 2).

*Fig. 1*

*Fig. 2*

*Fig. 3*

*Fig. 4*

*Fig. 5*

*Fig. 6*

*Fig. 7*

*Fig. 8*

Fig. 9

31    35    32

29    29

27    28

36

26

Fig. 10

27    28

29    29

35    33    34